(19) Europäisches Patentamt
European Patent Office
Office européen des brevets

(11) EP 0 735 073 B1

(12) EUROPÄISCHE PATENTSCHRIFT

(45) Veröffentlichungstag und Bekanntmachung des Hinweises auf die Patenterteilung:
**14.03.2001 Patentblatt 2001/11**

(51) Int Cl.[7]: **C08G 64/30**, C08G 64/20

(21) Anmeldenummer: **96104205.8**

(22) Anmeldetag: **16.03.1996**

(54) **Verfahren zur Herstellung von thermoplastischem Polycarbonat**

Process for the preparation of thermoplastic polycarbonate

Procédé pour la préparation de polycarbonate thermoplastique

(84) Benannte Vertragsstaaten:
**BE DE ES IT NL**

(30) Priorität: **29.03.1995 DE 19511483**

(43) Veröffentlichungstag der Anmeldung:
**02.10.1996 Patentblatt 1996/40**

(73) Patentinhaber: **BAYER AG**
**51368 Leverkusen (DE)**

(72) Erfinder:
- **Fischer, Thomas, Dr.**
  **47809 Krefeld (DE)**
- **Bachmann, Rolf, Dr.**
  **51469 Bergisch Gladbach (DE)**
- **Hucks, Uwe**
  **46519 Alpen (DE)**
- **Rhiel, Franz-Ferdinand, Dr.**
  **41540 Dormagen (DE)**
- **Kühling, Steffen, Dr.**
  **40670 Meerbusch (DE)**

(56) Entgegenhaltungen:
**EP-A- 0 561 629**
**EP-A- 0 629 645**
**EP-A- 0 667 366**
**EP-A- 0 719 813**
**WO-A-95/03351**
**DE-A- 1 495 730**
**DE-A- 1 570 617**

- **PATENT ABSTRACTS OF JAPAN vol. 015, no. 297 (C-0854), 29.Juli 1991 & JP 03 109420 A (IDEMITSU PETROCHEM CO LTD), 9.Mai 1991, & DATABASE WPI Derwent Publications Ltd., London, GB; AN 91-181473**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 735 073 B1

## Beschreibung

Gegenstand der vorliegenden Erfindung ist ein mindestens zweistufiges Schmelzeverfahren zur Herstellung von lösungsmittelfreiem Polycarbonat über die Oligocarbonatstufe, ausgehend von aromatischen Diphenolen und Kohlensäurediarylestern unter Verwendung von Katalysatoren bei Temperaturen zwischen 80°C und 400°C und Drücken von 1000 mbar bis 0,01 mbar, das dadurch gekennzeichnet. ist, daß man bei der Herstellung der Oligocarbonatstufe mindestens einen kontinuierlich betriebenen Rohrreaktor verwendet.

Die Herstellung von aromatischen Oligo-/Polycarbonaten nach dem Schmelzeumesterungsverfahren ist literaturbekannt und beispielsweise in der Encyclopedia of Polymer Science, Vol. 10 (1969), Chemistry and Physics of Polycarbonates, Polymer Reviews, H. Schnell, Vol. 9. John Wiley and Sons, Inc. (1964) vorbeschrieben.

Im Stand der Technik z.B. in der JA 2-153 923 wird die Herstellung von Oligocarbonaten in der Batchfahrweise, also z.B. in einem Kessel beschrieben. Diese Verfahrensweise hat den Nachteil einer großen Rückvermischung und somit eines breiten Verweilzeitverhaltens, was zu einer längeren Verweilzeit und damit zu einer erhöhten thermischen Produktschädigung führt. Es wurde nun gefunden, daß die Monophenolabdampfung im Polycarbonatumesterungsverfahren zum Oligocarbonat in einem kontinuierlich betriebenen Rohrreaktor mit geringer Rückvermischung betrieben werden kann.

Oligocarbonate im Sinne der vorliegenden Erfindung sind solche mit mittleren Gewichtsmittelmolekulargewichten $\overline{M}w$ von 750 bis 10 000, vorzugsweise von 1 000 bis 7 000, ermittelt durch Messung der relativen Lösungsviskosität in Dichlormethan oder in Mischungen gleicher Gewichtsmengen Phenol/o-Dichlorbenzol, geeicht durch Lichtstreuung.

Für das erfindungsgemäße Verfahren geeignete Diphenole sind solche der Formel (I)

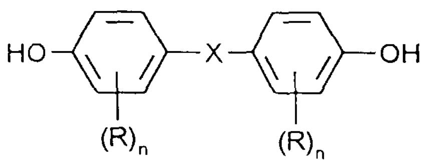

(I)

worin

X = $C_1$-$C_8$-Alkyliden oder Cycloalkyliden, S oder eine Einfachbindung und

R = $CH_3$, Cl oder Br und

n = Null, 1 oder 2 ist.

Bevorzugte Diphenole sind z.B.:

4,4'-Dihydroxydiphenyl,
4,4'-Dihydroxydiphenylsulfid,
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1-Bis-(4-hydroxyphenyl)-3,3,5-trimethylcyclohexan.

Besonders bevorzugte Diphenole aus den vorstehend genannten sind 2,2-Bis-(4-hydroxyphenyl)-propan und 1,1-Bis-(4-hydroxyphenyl)-3,3,5-trimethylcyclohexan.

Die vorstehend genannten Diphenole können zur Herstellung von Homo- oder Copolymeren eingesetzt werden.

Kohlensäurediester im Sinne vorliegender Erfindung sind Di-$C_6$-$C_{20}$-Arylester, vorzugsweise die Diester von Phenol oder alkylsubstituierten Phenolen, also Diphenylcarbonat oder z.B. Dikresylcarbonat. Bezogen auf 1 Mol Bisphenol werden die Kohlensäurediester in 1,01 bis 1,30 Mol, bevorzugt in 1,02 bis 1,15 Mol eingesetzt.

Es ist darauf zu achten, daß die Reaktionskomponenten für die erste Stufe (Oligocarbonatsynthese), also die Diphenole und die Kohlensäurediarylester frei von Alkali- und Erdalkaliionen sind, wobei Mengen von kleiner 0,1 ppm

an Alkali- und Erdalkaliionen toleriert werden können. Derart reine Diphenole bzw. Kohlensäurediarylester sind erhältlich, indem man die Kohlensäurediarylester bzw. Diphenole umkristallisiert, wäscht und/oder destilliert. Beim erfindungsgemäßen Verfahren soll der Gehalt an Alkali- und Erdalkalimetallionen sowohl im Diphenol als auch im Kohlensäurediester einen Wert von <0,1 ppm betragen. Der Gesamtgehalt an Chlor der Rohstoffe. sollte einen Wert von 2 ppm nicht übersteigen und der Gehält an verseifbarem Chlor des Kohlensäurediesters einen Wert von 0,05 ppm nicht übersteigen.

Die Polycarbonate können durch den Einsatz geringer Mengen Verzweiger bewußt und kontrolliert verzweigt werden. Einige Verzweiger sind:

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthalsäure,
Tetra-(4-hydroxyphenyl)-methan,
Tetra-(4-(4-hydroxyphenyl-isopropyl)-phenoxy)-methan,
1,1-Bis-(4',4''-dihydroxytriphenyl)-methyl)-benzol und insbesondere
$\alpha,\alpha',\alpha''$-Tris-(4-hydroxyphenyl)-1,3,5-triisopropylbenzol.

Weitere mögliche Verzweiger sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern, können mit den Diphenolen zusammen eingesetzt werden.

Katalysatoren im Sinne des erfindungsgemäßen Verfahrens sind alle anorganischen oder organischen basischen Verbindungen beispielsweise Lithium-, Natrium-, Kalium-, Cäsium-, Calcium-, Barium-, Magnesium-, -hydroxide, -carbonate, -halogenide, -phenolate, -diphenolate, -fluoride, -acetate, -phosphate, -hydrogenphosphate, -boranate, Stickstoff- und Phosphorbasen wie beispielsweise Tetramethylammoniumhydroxid, Tetramethylammoniumacetat, Tetramethylammoniumfluorid, Tetramethylammoniumtetraphenylboranat, Tetraphenylphosphoniumfluorid, Tetraphenylphosphoniumtetraphenylboranat, Dimethyldiphenylammoniumhydroxid, Tetraethylammoniumhydroxid, DBU, DBN oder Guanidinsysteme wie beispielsweise das 1,5,7-Triazabicyclo-[4,4,0]-dec-5-en, 7-Phenyl-1,5,7-triazabicyclo-[4,4,0]-dec-5-en, 7-Methyl-1,5,7-triazabicyclo-[4,4,0]-dec-5-en, 7,7'-Hexyliden-di-1,5,7-triazabicyclo-[4,4,0]-dec-5-en, 7,7'-Decycliden-di-1,5,7-triazabicyclo-[4,4,0]-dec-5-en, 7,7'-Dodecyliden-di-1,5,7-triazabicyclo-[4,4,0]-dec-5-en oder Phosphazene wie beispielsweise das Phosphazen-Base $P_1$-t-Oct = tert.-Octyl-iminotris-(dimethylamino)-phosphoran, Phosphazen-Base $P_1$-t-Butyl = tert.-Butyl-iminotris-(dimethylamino)-phosphoran, BEMP = 2-tert.-Butylimino-2-diethylamino-1,3-dimethylperhydro-1,3-diaza-2-phosphorin.

Bevorzugte Katalysatoren im Sinne des erfindungsgemäßen Verfahrens für die Herstellung der Oligocarbonatstufe sind Verbindungen der allgemeinen Formel (2) und (3):

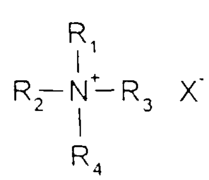

(2),

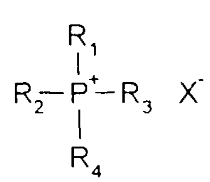

(3),

wobei

| | |
|---|---|
| $R_1$ bis $R_4$ | dieselben oder verschiedenen Alkyle, Aryle oder Cycloalkyle sein können und |
| $X^-$ | ein Anion sein kann, bei dem das korrespondierende Säure-Base-Paar $H^+ + X^- \rightleftarrows HX$ einen $pK_B$ von <11 besitzt. |

Diese Katalysatoren werden in Mengen von $10^{-2}$ bis $10^{-8}$ Mol, bezogen auf 1 Mol Diphenol, eingesetzt.

Die Katalysatoren können auch in Kombination (zwei oder mehrere) miteinander eingesetzt werden.

Beim Einsatz von Alkali-/Erdalkalimetallkatalysatoren kann es vorteilhaft sein, die Alkali-/Erdalkalimetallkatalysatoren zu einem späteren Zeitpunkt (z.B. nach der Oligocarbonatsynthese bei der Polykondensation in der zweiten Stufe) zuzusetzen. Die Zugabe des Alkali-/Erdalkalimetallkatalysators kann dann z.B. als Feststoff oder als Lösung in Wasser, Phenol, Oligocarbonat, Polycarbonat oder als Masterbatch in den vorstehenden Stoffen erfolgen. Die Mitverwendung von Alkali- bzw. Erdalkalimetallkatalysatoren widerspricht nicht der vorstehend erwähnten Forderung nach Reinheit der Reaktionspartner.

Die Umsetzungsreaktion zum Oligocarbonat aus der aromatischen Dihydroxyverbindung und aus dem Kohlensäurediester in der Schmelze wird bevorzugt selbst in zwei Stufen durchgeführt. In der ersten Stufe findet das Aufschmelzen der aromatischen Dihydroxyverbindung und des Kohlensäurediesters bei Temperaturen von 80 bis 250°C, bevorzugt 100 bis 230°C, besonders bevorzugt 120 bis 190°C unter normalem Druck in 0,1 bis 5 Stunden, bevorzugt 0,25 bis 3 Stunden statt. Bei einer Flüssigdosierung der Rohstoffe entfällt dieser erste Schritt der Verfahrensführung.

Nach Zugabe des Katalysators wird in der zweiten Stufe durch Abdestillieren des Monophenols das Oligocarbonat hergestellt.

Die Reaktion der aromatischen Dihydroxyverbindung und des Kohlensäurediesters zum Oligocarbonat wird in einem beziehungsweise, wenn erforderlich, in mehreren parallel geschalteten Rohrreaktor/en oder in mehreren in Reihe geschalteter Rohrreaktoren, die kontinuierlich im Bereich von 180 bis 250°C bei 1 bar bis 5 mbar, bevorzugt bei 190 bis 230°C bei 800 mbar bis 10 mbar betrieben werden. Ideal sind ein bis drei Rohrreaktoren.

Es ist vorteilhaft das Vorkondensat der aromatischen Dihydroxyverbindung und des Kohlensäurediesters vor dem Eintritt in den Rohrreaktor einer isothermen Zwischenentgasung (Flash des Monophenols) zu unterziehen.

Erfindungsgemäß geeignete Rohrreaktoren sind senkrecht stehende Apparate mit Wärmeaustauschflächen, z.B. ein von außen beheiztes Rohr mit einem heizbaren statischen Mischer oder Kreuzgitterwärmetauscher. Erfindungsgemäß bevorzugt sind Rohrbündelwärmeaustauscher mit oder ohne Einbauten. Dem oder den Rohrreaktoren sind Gas/Flüssigkeitsabscheider nachgeschaltet. Die Wärmeaustauschflächen sind so konzipiert, daß das bei der Reaktion freiwerdende Monophenol verdampft werden kann. Die Prozeßführung ist so gestaltet, daß das Produkt von unten in den Rohrreaktor eintritt. Damit ist in dem Reaktor aufgrund der von unten nach oben abnehmenden Flüssigkeitssäule ein Druckprofil vorhanden. Die Energiezufuhr kann in einer oder mehreren Beheizungszonen erfolgen, bevorzugt erfolgt sie im Gegenstrom.

Die Schmelzeviskosität der Oligokondensation in dem erfindungsgemäß einzusetzenden Rohrreaktor liegt im Bereich von $eta_m$ = 1 bis 10 000 mPa.s, bevorzugt im Bereich von $eta_m$ = 5 bis 5 000 mPa.s

Die Polykondensation des Oligocarbonats zum Polycarbonat wird durch weiteres Erhöhen der Temperatur auf 250 bis 400°C, bevorzugt auf 270 bis 360°C, ganz besonders bevorzugt bei 280 bis 320°C und bei einem Druck <100 mbar bis 0,01 mbar durchgeführt.

Die Molekulargewichte der Oligocarbonate richten sich danach, wie die gewünschte Endviskosität der Polycarbonate sein soll; so werden durch die Kondensation von niedrigmolekularen Oligocarbonaten niedrigmolekulare Polycarbonate erhalten und durch die Kondensation von höhermolekularen Oligocarbonaten höhermolekulare Polycarbonate erhalten.

Der letzte Schritt, die Polykondensation, wird bevorzugt in kurzen Zeiten <1 h, bevorzugt <30 min durchgeführt. Hierfür eignen sich Hochviskosreaktoren, insbesondere einfache Scheibenreaktoren und Hochviskosscheibenreaktoren, Kneter, Schneckenmaschinen also z.B. ein Zwischenschneckenkneter .

Die erfindungsgemäß erhältlichen aromatischen Polycarbonate sollen mittlere Gewichtsmittelmolekulargewichte $M_w$ von 18 000 bis 60 000, vorzugsweise von 19 000 bis 40 000 haben, ermittelt durch Messung der rel. Lösungsviskosität in Dichlormethan oder in. Mischungen gleicher Gewichtsmengen Phenol/o-Dichlorbenzol, geeicht durch Lichtstreuung.

Die OH-Endgruppengehalte der Polycarbonate sollen <30 %, bevorzugt <25 %, besonders bevorzugt <20 % und ganz besonders bevorzugt <10 % liegen, bezogen auf 100 % der Gesamtentgruppen des Polycarbonats.

Die Oligocarbonate können auch isoliert, z.B. granuliert und anschließend in einem separaten Schritt polykondensiert werden. Zur Begrenzung der mittleren Gewichtsmolmassen $M_w$ der Polymeren können in bekannter Weise (EP 360 578) Molmassenregler, wie beispielsweise Alkylphenol, in den berechneten Mengen eingesetzt werden.

Zur Verbesserung der Eigenschaften können den erfindungsgemäß hergestellten Polycarbonaten Hilfs- und Verstärkungsstoffe zugemischt werden. Als solche sind u.a. in Betracht zu ziehen: Stabilisatoren, Fließhilfsmittel, Entformungsmittel, Brandschutzmittel, Pigmente, fein zerteilte Mineralien, Faserstoffe, z.B. Alkyl- und Arylphosphite, -phosphate, -phosphane, niedermolekulare Carbonsäureester, Halogenverbindungen, Salze, Kreide, Quarzmehl, Glas- und Kohlenstoffasern.

Weiterhin können den erfindungsgemäßen Polycarbonaten auch andere Polymere zugemischt werden, z.B. Polyolefine, Polyurethane, Polystyrole.

Der Zusatz dieser Stoffe erfolgt vorzugsweise auf herkömmlichen Aggregaten zum fertigen Polycarbonat, kann jedoch, je nach den Erfordernissen, auch während der Herstellung des erfindungsgemäßen Verfahrens erfolgen.

Darüber hinaus ist für besondere Anwendungen auch die Modifizierung der Polycarbonate durch Einkondensation von Blöcken, Segmenten und Comonomeren möglich, z.B. von Siloxanblöcken mit phenolischen OH-Endgruppen, von aromatischen und aliphatischen Polyestern mit phenolischen OH- und Carbonsäure-Endgruppen, von Polyphenylensulfid-Blöcken mit OH-Endgruppen, von Polyphenylenoxid-Blöcken mit OH-Endgruppen und ähnlichen Polymeren mit phenolischen OH-Endgruppen.

In der beiliegenden Zeichnung bedeuten

1. Vakuumpumpe
2. Phenol
3. Vorkondensat
4. Mantelbeheizter Rohrreaktor
5. 40 cm und
6. Oligocarbonat

## Beispiele

### Beispiel 1

In einem Vorratsbehälter (ölmantelbeheizt) werden 913,2 g Bisphenol A (4,0 Mol) und 856,8 g Diphenylcarbonat (4,0 Mol) bei 150°C aufgeschmolzen und mit 0,02634 g Tetraphenylphosphonium-tetraphenylboranat (0,001 Mol-%) versetzt. Nach Erhitzen auf 200°C und 30 min Verweilzeit wird das Vorkondensat auf 220°C erhitzt und durch Anlegen von Vakuum (100 mbar) über einen Zeitraum von 35 min Phenol abdestilliert. Danach wird das Produkt eta rel. 1,020, etam 23 mPa.s) kontinuierlich von unten in einen mantelbeheizten (230°C) Rohrreaktor (40 cm Länge und 3,5 cm Durchmesser) mit (500 g/h) eingespeist. Das angelegte Vakuum beträgt 60 mbar. Dabei bilden sich in der Schmelze teils feinperlige Blasen, teils Pilzblasen aus abgespaltenem Phenol. Das viskose Oligocarbonat $eta_{rel}$ = 1,035, $eta_m$ 110 mPa·s fließt dann in das Auffanggefäß. Das aus der o.g. Apparatur gewonnene Oligocarbonat wird in einen gerührten Kolben mit aufgesetzter Kolonne überführt und das Vakuum stufenweise bis auf 1 mbar verbessert und die Temperatur dabei auf 260°C erhöht. Man erhält dann ein farbhelles, lösungsmittelfreies Oligocarbonat mit einer rel. Lösungsviskosität von 1,157 (Dichlormethan, 25°C, 5 g/l). Dem Oligocarbonat werden nun NaOH ($5*10^{-4}$Mol %), bezogen auf Bisphenol A, als 1 %ige wäßrige Lösung zugegeben und das Oligocarbonat bei 280°C und 0,1 mbar 1,5 Stunden gerührt. Man erhält ein farbhelles, lösungsmittelfreies Polycarbonat mit einer rel. Lösungsviskosität von 1,305 (Dichlormethan, 25°C, 5 g/l). Der phenolische OH-Wert des Polycarbonats beträgt 220 ppm.

### Beispiel 2

Wie Beispiel 1, nur wird das Vorkondensat bei 210°C und 200 mbar hergestellt ($eta_{rel.}$ = 1,015, $eta_m$ = 3 mPa·s). Nach Durchlauf durch den Rohrreaktor erhält man ein Oligocarbonat mit einer $eta_{rel.}$ = 1,023, $eta_m$ = 25 mPa·s.

### Beispiel 3

Wie Beispiel 1, nur wird das Vorkondensat bei 220°C und 150 mbar hergestellt ($eta_{rel.}$ = 1,019, $eta_m$ = 10 mPa·s). Nach Durchlauf durch den Rohrreaktor erhält man ein Oligocarbonat mit einer $eta_{rel}$. = 1,025, $eta_m$ = 30 mPa·s.

## Patentansprüche

**1.** Verfahren zur Herstellung von aromatischem Polycarbonat über die Oligocarbonatstufe durch mindestens zweistufige Schmelzeumesterung ausgehend von Diphenolen und Kohlensäurediarylestern unter Verwendung von Katalysatoren bei Temperaturen zwischen 80 und 400°C und Drücken von 1 000 mbar bis 0,01 mbar, das dadurch

gekennzeichent ist, dass man bei der Herstellung der Oligocarbonatstufe mindestens einen kontinuierlich und vertikal betriebenen Rohrreaktor verwendet, der von unten mit Produkt gespeist wird und wobei der Beheizungsstrom des/der Rohrreaktors(en) im Gegenstrom zum Produktfluß geführt wird.

**2.** Verfahren gemäß Anspruch 1, dadurch gekennzeichnet, daß der/die Rohrreaktor(en) bei 180 bis 250°C und 1 bar bis 5 mbar betrieben werden.

**3.** Verfahren gemäß Anspruch 1, dadurch gekennzeichnet, daß der/die Rohrreaktor(en) bei 190 bis 230°C und 800 mbar bis 10 mbar betrieben werden.

**4.** Verfahren gemäß Ansprüchen 1 und 2, dadurch gekennzeichnet, daß das erhaltene Oligocarbonat mittlere Molekulargewichte $M_w$ von 750 bis 10 000 aufweist.

**5.** Verfahren gemäß Anspruch 1, dadurch gekennzeichnet, daß die Oligokondensation in einem $eta_m$-Bereich von 1 bis 10 000 mPa.s abläuft.

## Claims

**1.** Process for the production of aromatic polycarbonate via the oligocarbonate intermediate by at least two-stage melt transesterification starting from diphenols and carbonic acid diaryl esters with the use of catalysts at temperatures between 80 and 400 °C and pressures of 1,000 mbar to 0.01 mbar, which is characterized in that the oligocarbonate intermediate is produced using at least one continuously and vertically operated tubular reactor which is supplied with product from below and wherein the heating stream of the tubular reactor(s) is passed countercurrently to the product stream.

**2.** Process according to claim 1, characterized in that the tubular reactor(s) is (are) operated at 180 to 250°C and 1 bar to 5 mbar.

**3.** Process according to claim 1, characterized in that the tubular reactor(s) is (are) operated at 190 to 230 °C and 800 mbar to 10 mbar.

**4.** Process according to claims 1 and 2, characterized in that the oligocarbonate obtained has average molecular weights $M_w$ of 750 to 10,000.

**5.** Process according to claim 1, characterized in that the oligocondensation proceeds in an $eta_m$ range of 1 to 10,000 mPa·s.

## Revendications

**1.** Procédé pour la préparation de polycarbonate aromatique via l'étape de préparation d'un oligocarbonate par transestérification en fusion au moins en deux étapes à partir de diphénols et d'esters diaryliques de l'acide carbonique en utilisant des catalyseurs à des températures entre 80 et 400°C et sous des pressions de 1.000 mbar à 0,01 mbar, qui se caractérise par le fait que, lors de l'étape de préparation de l'oligocarbonate, on utilise au moins un réacteur tubulaire travaillant en continu et à la verticale qui est alimenté par le bas avec le produit et dans lequel le courant de chauffage du ou des réacteurs tubulaires est guidé à contre-courant par rapport à l'écoulement du produit.

**2.** Procédé selon la revendication 1, caractérisé en ce que le ou les réacteurs tubulaires sont actionnés à une température de 180 à 250°C et sous une pression de 1 bar à 5 mbar.

**3.** Procédé selon la revendication 1, caractérisé en ce que le ou les réacteurs tubulaires sont actionnés à une température de 190 à 230°C et sous une pression de 800 mbar à 10 mbar.

**4.** Procédé selon les revendications 1 et 2, caractérisé en ce que l'oligocarbonate obtenu présente des poids moléculaires moyens $M_w$ de 750 à 10.000.

5. Procédé selon la revendication 1, caractérisé en ce que l'oligocondensation se déroule dans un domaine $\eta_m$ de 1 à 10.000 mPa.s.

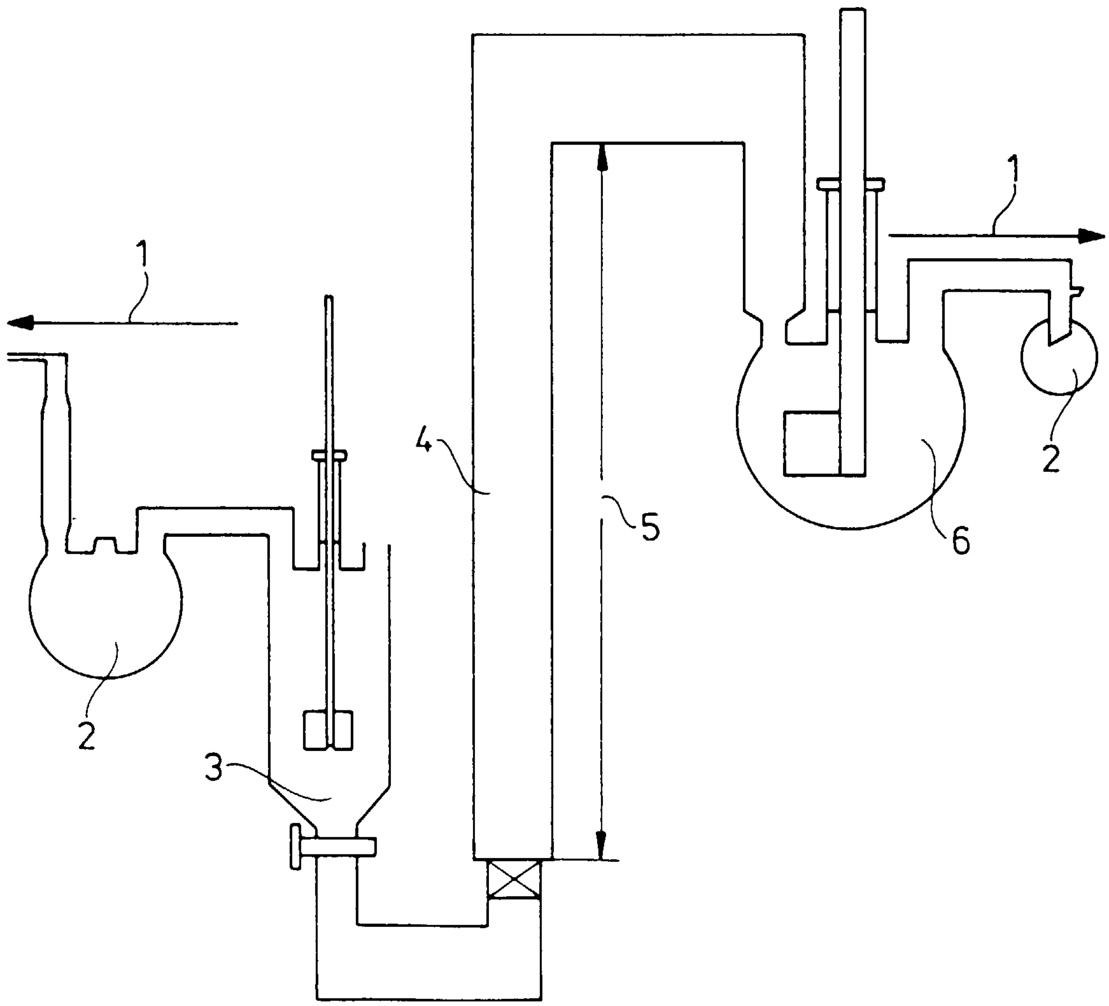
1
1
2
2
3
4
5
6